Europäisches Patentamt

European Patent Office

Office européen des brevets

(11) Numéro de publication: **0 519 786 B1**

(12) **FASCICULE DE BREVET EUROPEEN**

(45) Date de publication de fascicule du brevet: **15.03.95**

(51) Int. Cl.6: **B64C 27/00**, F16F 13/00

(21) Numéro de dépôt: **92401603.3**

(22) Date de dépôt: **10.06.92**

(54) **Dispositif de liaison élastique entre deux pièces, et aéronef à voilure tournante comportant ledit dispositif.**

(30) Priorité: **18.06.91 FR 9107444**

(43) Date de publication de la demande:
**23.12.92 Bulletin 92/52**

(45) Mention de la délivrance du brevet:
**15.03.95 Bulletin 95/11**

(84) Etats contractants désignés:
**DE GB IT**

(56) Documents cités:
**EP-A- 0 335 786**
**US-A- 3 690 607**

(73) Titulaire: **EUROCOPTER FRANCE**
**Aéroport International Marseille-Provence**
**F-13725 Marignane Cédex (FR)**

(72) Inventeur: **Mouille, René Louis**
**Villa "La Pinède",**
**7, Chemin du Moulin de Testas**
**F-13090 Aix-en-Provence (FR)**

(74) Mandataire: **Bonnetat, Christian et al**
**CABINET BONNETAT**
**23, Rue de St.Pétersbourg**
**F-75008 Paris (FR)**

Rank Xerox (UK) Business Services
(3.10/3.09/3.3.3)

## Description

La présente invention concerne un dispositif de liaison élastique entre deux pièces pour transmettre de l'une à l'autre les efforts statiques dans l'axe du dispositif et simultanément filtrer les excitations vibratoires coaxiales associées qui sont transmises de l'une à l'autre.

Plus particulièrement, quoique non exclusivement, un tel dispositif peut être utilisé dans la suspension reliant la boîte de transmission principale au fuselage d'un aéronef à voilure tournante, tel qu'un hélicoptère, pour filtrer les vibrations engendrées par le rotor et transmises au fuselage dudit aéronef par ladite boîte de transmission.

En effet, l'un des problèmes fondamentaux de l'hélicoptère relève du niveau vibratoire général qui conditionne, d'une part, le niveau des contraintes alternées dans toute la machine (et par conséquent la tenue en fatigue et par suite la durée de vie des pièces) et, d'autre part, le confort en cabine et les vibrations des commandes.

L'objet de nombreuses recherches a donc été d'atténuer, à défaut de l'annuler complètement, ce niveau vibratoire inhérent au fonctionnement même du rotor qui non seulement transmet au moyeu des efforts et des moments statiques ou quasi-statiques créés par :
- la portance (perpendiculaire au plan du rotor),
- la traînée (parallèle à la vitesse horizontale $V_H$ dela machine),
- la force de dérive (perpendiculaire aux deux précédentes) qui reste quasi-nulle,

mais également des efforts et des moments périodiques provenant des dissymétries aérodynamiques (portance et traînée de profil) qui apparaissent au cours de la rotation des pales, essentiellement dues à $V_H$ en vol de translation à grande vitesse, ou encore des dissymétries résultant de l'inégalité de répartition des vitesses induites sur le disque du rotor à faible vitesse (zone de transition). Ces efforts et moments aérodynamiques alternés sont transmis au centre du rotor après avoir été atténués ou amplifiés par les pales.

En désignant d'une façon générale par $\Omega$ le régime de rotation du rotor et par <u>b</u> le nombre de pales, il est rappelé que :
- les efforts (dus aux mouvements de battement des pales) et les moments (dus aux mouvements de traînée des pales) dont les axes sont portés par l'axe du rotor, ne sont transmis au mât et au fuselage que si leur fréquence est en $kb\Omega$ (k : entier positif, égal ou supérieur à 1), le transfert de ces efforts et moments des axes tournants aux axes fixes s'effectuant sans changement de fréquence (effets de pompage et de torsion dans la structure) ;
- les efforts (dus aux mouvements de traînée des pales) et les moments (dus aux mouvements de battement des pales) dont les axes sont dans le plan du rotor, ne sont transmis au mât et au fuselage que si leur fréquence est un harmonique de$(kb\pm1)\Omega$, les efforts et moments résultants étant alors à la fréquence $kb\Omega$ en axes fixes (effets de roulis et de tangage, tamis transversal ou longitudinal, principalement en $b\Omega$).

En conséquence, on retiendra qu'un rotor équilibré ne transmet, outre les efforts et les moments statiques, que des efforts et des moments alternés d'une fréquence multiple du régime du rotor multiplié par le nombre de pales, la fréquence fondamentale valant $b\Omega$.

Il conviendrait alors, pour éviter les efforts périodiques dangereux de fréquence multiple du régime du rotor, d'augmenter le nombre de pales car :
- les harmoniques d'excitation au niveau des pales affectant les vibrations dans le fuselage sont distribués suivant l'ordre ci-après :

| | | | | | | | | | | |
|---|---|---|---|---|---|---|---|---|---|---|
| . bipale | 1 | 2 | 3 | 4 | 5 | 6 | 7 | 8 | 9 | 10 | 11 |
| . tripale | | 2 | 3 | 4 | 5 | 6 | 7 | 8 | 9 | 10 | 11 |
| . quadripale | | | 3 | 4 | 5 | | 7 | 8 | 9 | | 11 |
| . pentapale | | | | 4 | 5 | 6 | | | 9 | 10 | 11 |

- l'amplitude des harmoniques est d'autant plus faible que leur ordre est plus élevé ;
- les excitations affectant le confort sont les harmoniques $(kb\pm1)\Omega$ dans les axes des pales ;
- plus la fréquence d'excitation est basse, plus l'homme est sensible, et cela notamment suivant l'axe vertical.

Pour des raisons de coût et de complexité, il convient néanmoins de limiter le nombre des pales.

Par ailleurs, il est bien connu que les performances augmentent, les excitations augmentent comme $V_H^n$ (n>1) : à grande vitesse, le niveau vibratoire dans le fuselage croît de la même manière.

Ces remarques, complétées par l'évidence d'impératifs de confort de plus en plus importants, justifient d'imaginer des systèmes capables de transmettre les efforts et moments statiques désignés par $F_0$ tout en atténuant les vibrations, correspondant à la décomposition en série de Fourier $\Sigma Fn \cos n\Omega t$ (t : temps, n : ordre des harmoniques). Cette atténuation doit tendre notamment à minimiser les composantes verticales des sollicitations dynamiques au niveau du fuselage, qui s'avèrent les plus gênantes en pratique.

Pour diminuer ces vibrations, on dispose d'un certain nombre de moyens d'action.

Le rotor étant le générateur initial des efforts et des moments alternés, le premier moyen consiste à concevoir les pales de sorte que les efforts appliqués (au sens large du terme) soient compensés par les efforts d'inertie (optimisation des répartitions des masses, des raideurs, notamment) : il y a alors atténuation de la transmission des efforts au moyeu.

Après optimisation des pales, il subsiste toutefois un torseur dynamique à la tête du rotor, composé de trois efforts orthogonaux et de trois moments également orthogonaux.

Des moyens particuliers doivent donc être prévus pour minimiser le coefficient de transmissibilité (rapport de l'amplitude des efforts ou moments transmis au fuselage à celle des efforts ou moments appliqués à la tête du rotor), qui caractérise en quelque sorte l'efficacité de ces moyens : il s'agit de moyens de contrôle actif du rotor ou de la structure, et de moyens de contrôle passif (antivibreurs ou résonateurs).

Pour mémoire, le contrôle actif du rotor s'effectue essentiellement par une loi de pilotage multicyclique du rotor, réalisée soit au niveau de la commande de pas, soit par la mise en mouvement d'un volet en extrémité des pales, de façon à ramener le niveau vibratoire de l'hélicoptère au-dessous d'un seuil choisi.

Le principe du contrôle actif de la structure est de produire un torseur, commandé et antagoniste au torseur perturbateur du rotor, qui minimise ou annule les vibrations dans une partie de la structure. Les applications mettent en oeuvre, par exemple, une barre équipée d'un vérin asservi, ou encore un dispositif avec, entre la boîte de transmission principale et le fuselage, des liaisons pilotées axialement en fonction des efforts produits et détectés sur la structure pour atténuer les vibrations, comme l'enseigne par exemple le brevet FR-2 566 862.

Les moyens de contrôle passif sont beaucoup plus nombreux que les précédents, compte tenu d'une efficacité acceptable et d'une relative facilité de réalisation et d'intégration, notamment aux hélicoptères. Ils ont pour objet de filtrer les vibrations entre les ensembles mécaniques du rotor principal et le fuselage.

Ainsi, le brevet FR-2 499 505 décrit un tel dispositif de contrôle passif, intégré dans la suspension reliant la boîte de transmission principale et le fuselage d'un hélicoptère. La suspension décrite dans le document cité ci-dessus comprend, d'une part, une membrane de reprise de la réaction au couple moteur, souple axialement et rigide radialement, disposée sous la boîte de transmission principale au niveau de la structure supérieure du fuselage et, d'autre part, des barres de transmission des efforts, issus du rotor, et des résonateurs à action unidirectionnelle situés dans un plan parallèle au fuselage. Chaque résonateur présente, comme cela est usuel, deux fonctions : une fonction "raideur" et une fonction "antirésonance". Dans ce cas, la fonction raideur est assurée par une lame souple reliée, d'une part, au fuselage et, d'autre part, au fond de la boîte de transmission principale. Par ailleurs, chaque barre est reliée à la lame respective à l'extrémité libre de cette dernière, extérieure aux appuis de la lame précités. La fonction antirésonance est assurée, quant à elle, par une masse disposée à une extrémité d'un bras de levier dont l'autre extrémité est reliée à la lame souple.

Cependant, l'existence d'un tel bras de levier implique, pour un dispositif à amplification mécanique de ce type, un encombrement important, ce qui restreint l'amplification possible en restant dans des limites raisonnables, soit d'encombrement, soit de masse.

Pour éviter cet inconvénient, on connaît un dispositif utilisant un "levier liquide", dans lequel un liquide de faible viscosité agit comme un levier augmentateur de course sur un arbre et une masse solidaires d'un ressort. Plus précisément, un dispositif de ce type, décrit dans le brevet FR-2 629 545, comporte un cylindre extérieur solidaire du fuselage d'un aéronef à voilure tournante, à son extrémité inférieure, et un cylindre intérieur solidaire, à son extrémité supérieure, de la boîte de transmission principale, un palier en élastomère entre les deux cylindres assurant la fonction raideur. La partie centrale du cylindre intérieur et deux arbres creux servent de guidage à une masse, montée coulissante sur lesdits arbres, et sont remplis d'huile de faible viscosité. La variation de volume des chambres situées aux extrémités du cylindre intérieur entraîne le déplacement de la masse avec une course amplifiée en permettant ainsi d'assurer la fonction antirésonance. Toutefois, un tel dispositif à amplification hydraulique de course n'est pas non plus dépourvu d'inconvénients. En effet, l'huile de faible viscosité risque de fuir, tandis que le plein d'huile est difficile à obtenir sans système de purge. On pourrait citer d'autres difficultés liées à l'utilisation d'un liquide comme de l'huile : dilatation, gel. Par ailleurs, il existe, dans ce cas, le risque d'absence momentanée de filtrage lors de l'application d'efforts statiques transitoires (mise en butée de la masse battante).

La présente invention a pour but d'éviter les inconvénients des dispositifs de contrôle passif, notamment révélés par les brevets FR-2 499 505 et FR-2 629 545 (qui sert de base pour le préambule de la revendication 1), et concerne un dispositif de liaison élastique entre deux pièces, dont la structure, quoique présentant certaines analogies avec le dispositif à "levier liquide" décrit en dernier, est dépourvue de masse battante, le dispositif de l'invention ne nécessitant pas, de plus, l'utilisation d'huile de faible viscosité.

A cet effet, le dispositif de liaison élastique entre deux pièces pour transmettre de l'une à l'autre les efforts statiques dans l'axe du dispositif et filtrer les vibrations coaxiales entre la première et la seconde pièce, du type comportant :

- un premier corps tubulaire interne pouvant être relié à la première pièce,
- un second corps tubulaire externe,'coaxial audit premier corps, et pouvant être relié à la seconde pièce,
- des moyens de rappel élastique en direction axiale, logés dans l'espace annulaire existant entre lesdits premier et second corps et reliant de façon étanche lesdits premier et second corps,

est remarquable, selon l'invention, en ce que :

- ledit espace annulaire est séparé, par lesdits moyens de rappel élastique, en des première et seconde chambres remplies d'un liquide,
- lesdites première et seconde chambres sont en communication, respectivement, par au moins un premier orifice et au moins un second orifice ménagés dans ledit premier corps, avec l'intérieur de ce dernier,
- à l'intérieur dudit premier corps, est prévu un distributeur de liquide comportant deux pistons, pour lesquels la paroi interne dudit premier corps joue le rôle de cylindre, reliés par une tige de piston et séparés l'un de l'autre de la distance l séparant lesdits premier et second orifices, et dont le volume défini entre eux peut être alimenté en liquide, et
- des moyens de rappel élastique et d'amortissement dudit distributeur sont prévus,

l'agencement des éléments précités étant tel que, lorsque le dispositif est en position neutre ou est soumis à des efforts statiques ou quasi-statiques, lesdits pistons obturent complètement lesdits orifices, les déplacements du corps cylindrique interne et du distributeur étant dans le dernier cas concomitants, et tel que, lorsque le dispositif est soumis à des vibrations, les pistons dégagent au moins partiellement l'un ou l'autre desdits orifices de façon à alimenter en liquide la chambre correspondante.

Ainsi, en statique, on obtient une suspension suffisamment raide dont le seul effet est de produire un déplacement limité pendant la phase de mise en mouvement des différents éléments du dispositif, tandis que, sous l'action d'efforts alternés, le dispositif permet l'assouplissement de la suspension grâce à une activation hydraulique auto-adaptable, comme cela sera expliqué plus en détail par la suite. De plus, le dispositif de l'invention autorise l'utilisation d'un fluide hydraulique usuel (par exemple du type utilisé dans des servo-commandes). De ce fait, le risque de fuite est moindre. L'absence de masse battante rend en outre impossible le défaut momentané de filtrage lors de l'application d'efforts statiques transitoires.

Selon une première variante de réalisation de l'invention, lesdits moyens de rappel élastique entre lesdits premier et second corps comprennent une paroi de séparation annulaire solidaire de la face externe du premier corps tubulaire interne et s'appuyant de façon étanche sur la face interne du second corps tubulaire externe, et deux ressorts hélicoïdaux, s'étendant parallèlement à l'axe X-X du dispositif, logés, respectivement, dans les première et seconde chambres, et s'appuyant, chacun, sur ladite paroi de séparation et la face d'extrémité, opposée à ladite paroi, de la chambre respective.

Selon une seconde variante de réalisation de l'invention, lesdits moyens de rappel élastique entre les premier et second corps sont constitués par une bague de matière synthétique relativement souple, solidaire de la face externe du premier corps tubulaire interne et de la face interne du second corps tubulaire externe. Ladite bague peut être réalisée notamment en élastomère.

Avantageusement, la tige de piston est creuse, et un orifice, dans la paroi de celle-ci, met en communication l'intérieur de la tige et le volume défini entre les pistons et cette dernière, tandis que, à l'extrémité opposée aux pistons, ladite tige est en communication avec un dispositif d'alimentation en liquide sous pression.

Selon d'autres caractéristiques avantageuses de l'invention, les première et seconde chambres sont en communication, respectivement, par des premier et second perçages, ménagés dans la paroi du second corps tubulaire externe, avec un système de purge, par l'intermédiaire de premier et second conduits, tandis que des orifices d'évacuation de liquide sont prévus dans lesdits premier et second corps tubulaires, extérieurement à la zone desdites première et seconde chambres.

Par ailleurs, les moyens de rappel élastique du distributeur peuvent être constitués par deux ressorts hélicoïdaux, logés dans le premier corps tubulaire interne, agissant de part et d'autre, respectivement, de l'ensemble formé par les deux pistons du distributeur.

4

De préférence, les moyens d'amortissement du distributeur comportent un piston, porté par la tige de piston du distributeur au voisinage de l'extrémité de celle-ci opposée aux pistons du distributeur, et susceptible de se déplacer dans un cylindre dont les deux chambres, délimitées par ledit piston, sont reliées par un conduit de section calibrée fixe ou, en variante, réglable, en particulier par un pointeau.

Les figures du dessin annexé feront bien comprendre comment l'invention peut être réalisée.

La figure 1 est une coupe longitudinale d'une première variante de réalisation du dispositif de l'invention.

Les figures 2 et 3 illustrent deux phases du fonctionnement du dispositif de la figure 1.

La figure 4 montre l'évolution du coefficient de transmissibilité en fonction de la pulsation réduite, pour différentes valeurs de l'amortissement relatif.

La figure 5 est une coupe longitudinale d'une seconde variante de réalisation du dispositif de l'invention.

La figure 6 illustre l'application du dispositif de l'invention à la suspension de la boîte de transmission principale d'un hélicoptère.

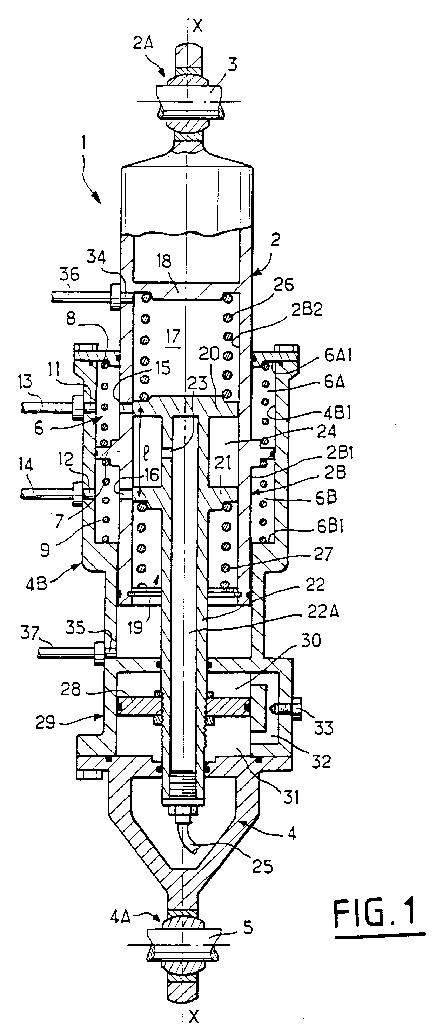

Comme on le voit sur la figure 1, le dispositif 1 comprend un premier corps tubulaire interne 2 pouvant être relié, à une extrémité 2A, à une première pièce 3 (dont seul l'axe de liaison est illustré sur la figure 1), et un second corps tubulaire externe 4, coaxial audit premier corps 2, et pouvant être relié à la seconde pièce 5 (dont, de même, seul l'axe de liaison est illustré sur la figure 1). Par ailleurs, la partie d'extrémité 4B, opposée à l'extrémité 4A, du second corps 4 entoure la partie d'extrémité 2B, opposée à l'extrémité 2A, du premier corps 2, en ménageant ainsi, entre les parties d'extrémité 4B et 2B, un espace annulaire 6 séparé en des première 6A et seconde 6B chambres étanches par des moyens de rappel élastique en direction axiale, reliant de façon étanche les premier 2 et second 4 corps. Dans l'exemple de réalisation illustré par la figure 1, ces moyens de rappel élastique comprennent une paroi de séparation annulaire 7 solidaire de la face externe 2B1 de la partie d'extrémité 2B du corps 2 et s'appuyant de façon étanche sur la face interne 4B1 de la partie d'extrémité 4B du corps 4 en formant un piston, et deux ressorts hélicoïdaux axiaux 8,9 logés, respectivement, dans les chambres 6A et 6B, et s'appuyant, chacun, sur la paroi de séparation 7 et la face d'extrémité 6A1 ou 6B1 de la chambre 6A ou 6B.

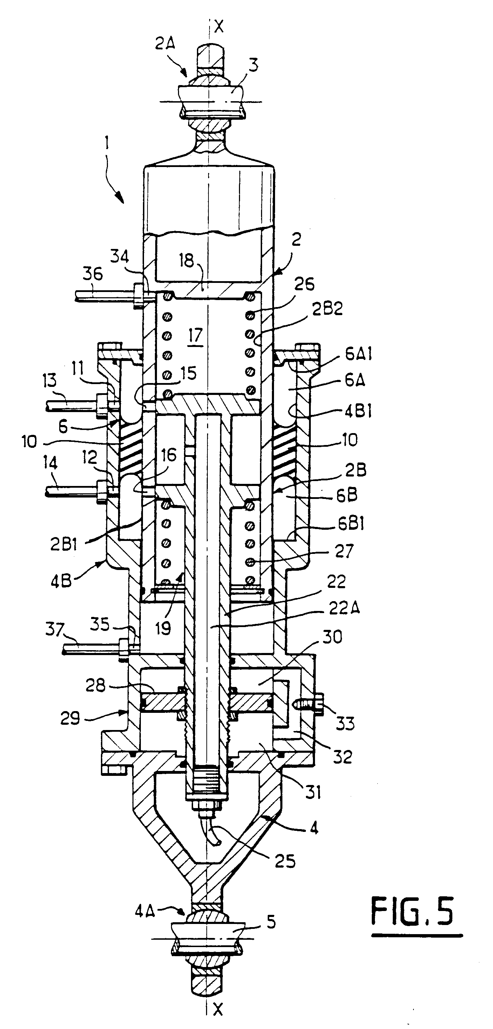

Dans la variante de réalisation illustrée par la figure 5, pour le reste identique à l'exemple de réalisation de la figure 1, les moyens de rappel élastiques sont constitués par une bague 10 de matière synthétique relativement souple, notamment un élastomère, solidaire de la face externe 2B1 de la partie d'extrémité 2B du corps 2 et de la face interne 4B1 de la partie d'extrémité 4B du corps 4.

Les chambres 6A et 6B sont remplies de liquide (fluide hydraulique usuel), et sont, d'une part, en communication, respectivement, par un premier perçage 11 et un second perçage 12 ménagés dans la paroi de la partie d'extrémité 4B du second corps 4 avec un système de purge (non représenté), par l'intermédiaire des conduits respectifs 13 et 14. D'autre part, les première 6A et seconde 6B chambres sont en communication, respectivement, par au moins un premier orifice 15 et au moins un second orifice 16 ménagés dans la paroi de la partie d'extrémité 2B du premier corps 2, avec l'intérieur 17 de ce dernier, limité, du côté de l'extrémité 2A, par une paroi transversale 18, et ouvert à son autre extrémité.

A l'intérieur 17 du premier corps 2, est prévu un distributeur de liquide 19 comportant deux pistons 20,21, pour lesquels la paroi interne 2B2 du premier corps 2 joue le rôle de cylindre, reliés par une tige de piston 22 parallèle à l'axe longitudinal X-X du dispositif 1, et séparés l'un de l'autre de la distance $l$ séparant lesdits premier 15 et second 16 orifices, l'épaisseur des pistons 20,21 correspondant par ailleurs sensiblement au diamètre desdits orifices. De plus, la tige de piston 22 est creuse, et un orifice 23, dans la paroi de celle-ci, met en communication l'intérieur 22A de la tige 22 et le volume 24 défini entre les pistons 20,21 et cette dernière. A l'extrémité opposée aux pistons 20,21, la tige 22 est en communication, par un conduit 25, avec un dispositif d'alimentation en liquide (fluide hydraulique), dispositif qui n'est pas représenté.

En outre, le distributeur 19 est associé à des moyens de rappel élastique, constitués de deux ressorts hélicoïdaux 26,27 s'appuyant, pour le premier 26, sur la paroi 18 et le piston 20, en position la plus extrême sur la tige 22, et, pour le second 27, sur le piston 21 et à la base du corps 2, et à des moyens d'amortissement comportant un piston 28, porté par la tige 22 au voisinage de son extrémité opposée aux pistons 20,21, et susceptible de se déplacer dans un cylindre 29 rempli de fluide hydraulique dont les deux chambres 30,31 sont reliées par un conduit 32, externe au cylindre, dont la section peut être calibrée fixe ou, en variante, réglée par un pointeau 33.

Deux orifices 34 et 35 prévus, respectivement, dans la paroi des corps 2 et 4 dans le "fond" de l'intérieur de ceux-ci, permettent, par des conduits respectifs 36 et 37, d'évacuer le fluide hydraulique, comme expliqué ci-dessous.

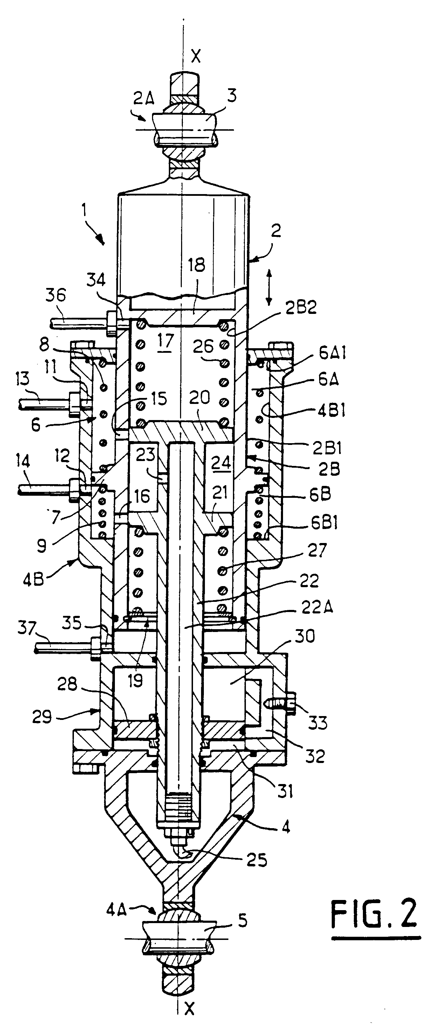

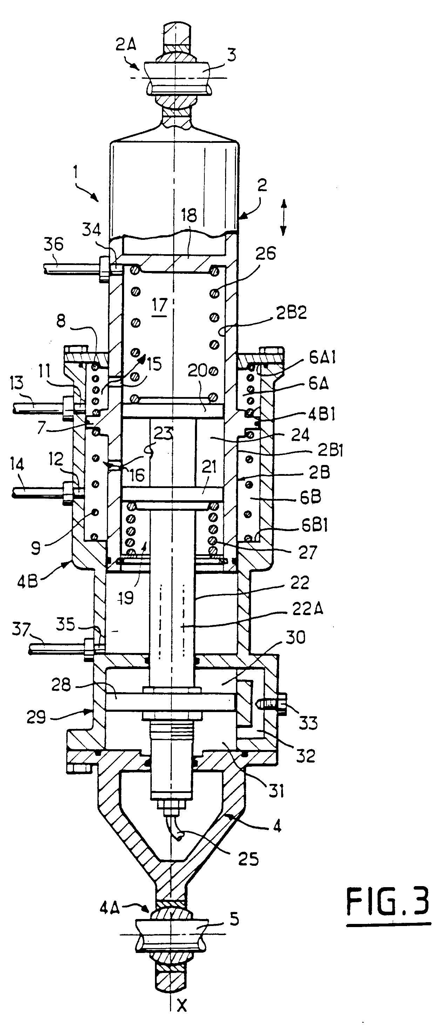

Le fonctionnement du dispositif selon l'invention est décrit ci-après en référence aux figures 2 et 3, et pour l'application particulière à la suspension de la boîte de transmission principale d'un hélicoptère, illustrée par la figure 6.

Dans ce cas, chaque dispositif 1 est disposé entre la boîte de transmission principale 3 d'un hélicoptère et le fuselage 5 de celui-ci, et trois tels dispositifs identiques (ou plus) peuvent être prévus pour transmettre entre la boîte de transmission principale et la structure du fuselage les efforts et moments statiques et filtrer les excitations dynamiques engendrées par le rotor sustentateur et propulseur de l'hélicoptère. Chaque dispositif 1 est fixé à la boîte de transmission principale 3 et au fuselage 5 par l'intermédiaire des chapes respectives 40 et 41.

Rappelant que les sollicitations externes, au niveau de la tête du rotor, induisent dans le dispositif (axialement) un effort global de la forme :

$$F = F_0 + \Sigma Fn \cos n\Omega t$$

le dispositif de l'invention est destiné à transmettre l'effort statique (ou moyen) $F_0$ quasi intégralement au fuselage pour assurer l'équilibre de l'hélicoptère, et à filtrer le plus efficacement possible les efforts alternés $\Sigma Fn \cos n\Omega t$.

Par conséquent, il s'agit, en premier lieu, d'une suspension suffisamment raide en statique pour que les déplacements relatifs entre la boîte de transmission principale et la structure restent "raisonnables". Cette fonction est assurée par l'un des ressorts 8 ou 9 (suivant le sens de l'effort externe), antagonistes et raides, de sorte que la transmission d'un écart de l'effort statique ou quasi-statique se fait par l'intermédiaire des corps 2 et 4 dont le mouvement relatif reste faible. Simultanément, le distributeur 19 est entraîné par le corps 2 et le ressort 26 ou 27 tendant à se comprimer et les moyens d'amortissement 28,29, donc pratiquement sans mouvement relatif par rapport au corps 2 (la mise en charge étant lente et progressive), et par suite sans découvrir les orifices 15 et 16 : le seul effet est alors de produire un amortissement pendant la phase de mise en mouvement des divers éléments lorsque l'écart de charge statique est appliqué (figure 2).

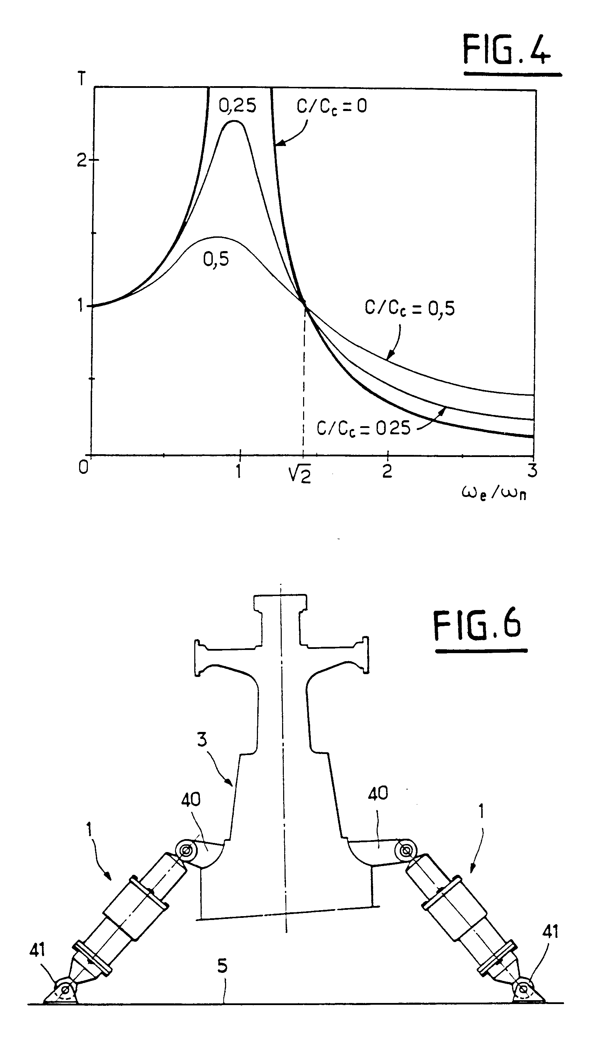

Il s'avère que le dispositif se comporte à peu près comme un système du second ordre avec rappel élastique et amortissement. Si $\omega_e$ désigne la pulsation de l'excitation et $\omega_n$ celle du dispositif, la figure 4 illustre l'évolution du coefficient de transmissibilité T en fonction de la pulsation réduite $\omega_e/\omega_n$ et pour différentes valeurs de l'amortissement relatif $c/c_c$. Comme $\omega_e$ est faible (effort statique variant lentement) et $\omega_n$ grand (raideur importante), les points de fonctionnement correspondent à un domaine de valeurs du rapport $\omega_e/\omega_n$ nettement inférieures à l'unité, évitant de ce fait tout risque de mise en résonance. L'examen de la figure 4 montre qu'il s'agit précisément d'un domaine où l'amortissement diminue favorablement la transmissibilité.

La figure 4 indique encore que l'amortissement devient défavorable pour $\omega_e/\omega_n > \sqrt{2}$ et qu'au-delà de cette valeur, si $\omega_e/\omega_n$ augmente, il en résulte que $\omega_n$ décroît pour une pulsation excitatrice $\omega_e$ donnée : on assouplit alors la suspension et simultanément la transmissibilité diminue avantageusement.

On notera toutefois que le domaine proche de $\omega e/\omega n = \sqrt{2}$ peut correspondre à une seconde possibilité de transmission quasi-intégrale d'efforts statiques évoluant modérément en fonction du temps, de sorte que la fréquence propre $\omega n$ du dispositif et par suite sa raideur restent modérées. Un tel point de fonctionnement implique une suspension moins raide que précédemment pour la transmission des efforts statiques transitoires, et cela d'autant plus quand un éventuel filtrage partiel des évolutions de ces efforts est envisagé (point de fonctionnement relatif à un coefficient de transmissibilité légèrement inférieur à l'unité, donc à un rapport $\omega e/\omega n$ supérieur à $\sqrt{2}$).

Une suspension ainsi réglée demeure trop raide sous l'action des sollicitations dynamiques telles que celles engendrées par un rotor d'hélicoptère, par exemple : un assouplissement plus important est souhaitable en régime dynamique pour également minimiser le coefficient de transmissibilité correspondant.

Conjointement à la transmission des efforts statiques, le dispositif proposé remplit cette seconde fonction d'assouplissement de la suspension et cela sous l'action d'efforts alternés (figure 3) dont la pulsation excitatrice fondamentale $\omega_e$ est égale à $b\Omega$, comme expliqué précédemment. Cette action se fait au travers d'une activation hydraulique auto-adaptable, ne faisant appel à aucun système électronique, ni à aucun calculateur, et à très faible amortissement.

Dans ce cas, le piston 28 du système d'amortissement est dans une position pratiquement bloquée, car l'effort dynamique est exercé à une fréquence trop élevée pour permettre un transfert d'huile important au travers de l'ajutage de la canalisation 32, et le distributeur 19 est ainsi fixe par rapport au corps 4. L'effort dynamique va simplement permettre un faible mouvement relatif entre les corps 2 et 4, compte tenu de la raideur importante des ressorts 8 et 9 : il y a alors ouverture, plus ou moins importante, des orifices 15 et 16, ce qui a pour effet, par exemple si le ressort 8 est comprimé et le ressort 9 détendu, de mettre en pression la chambre 6B par l'intermédiaire des orifices 23 et 16 (flèche), tout en mettant la chambre 6A à la bâche par l'intermédiaire des orifices 15 et 34 (flèche) : la pression exercée sur le piston 7 du côté de la chambre 6B, sans contre-pression sur sa face opposée, continue à entraîner le piston 7 et, par conséquent, le corps 2 dans le sens de l'effort exercé, le mouvement relatif entre les corps 2 et 4 est donc très efficacement amplifié par l'assistance hydraulique : on a assoupli la suspension de façon très importante et cela manifestement avec un amortissement réduit au minimum, c'est-à-dire favorablement d'après la figure 4, $\omega_n$ étant faible, $b\Omega/\omega_n$ peut être réglé à un niveau élevé.

On notera que le fonctionnement de la variante de réalisation de la figure 5 est tout à fait semblable à celui de la variante de la figure 1, qui vient d'être décrit.

**Revendications**

1. Dispositif (1) de liaison élastique entre deux pièces (3,5) pour transmettre de l'une à l'autre les efforts statiques dans l'axe du dispositif et filtrer les vibrations coaxiales entre la première et la seconde pièce, du type comportant :
   - un premier corps tubulaire interne (2) pouvant être relié à la première pièce (3),
   - un second corps tubulaire externe (4), coaxial audit premier corps (2), et pouvant être relié à la seconde pièce (5),
   - des moyens de rappel élastique (7,8,9; 10) en direction axiale, logés dans l'espace annulaire (6) existant entre lesdits premier et second corps (2,4) et reliant de façon étanche lesdits premier et second corps,

   caractérisé en ce que :
   - ledit espace annulaire (6) est séparé, par lesdits moyens de rappel élastique (7,8,9 ; 10), en des première (6A) et seconde (6B) chambres remplies d'un liquide,
   - lesdites première (6A) et seconde (6B) chambres sont en communication, respectivement, par au moins un premier orifice (15) et au moins un second orifice (16) ménagés dans ledit premier corps (2), avec l'intérieur (17) de ce dernier,
   - à l'intérieur dudit premier corps (2), est prévu un distributeur de liquide (19) comportant deux pistons (20,21), pour lesquels la paroi interne (2B2) dudit premier corps (2) joue le rôle de cylindre, reliés par une tige de piston (22) et séparés l'un de l'autre de la distance $\underline{l}$ séparant lesdits premier (15) et second (16) orifices, et dont le volume (24) défini entre eux peut être alimenté en liquide, et
   - des moyens de rappel élastique et d'amortissement (26,27 ; 28,29) dudit distributeur (19) sont prévus, l'agencement des éléments précités étant tel que, lorsque le dispositif (1) est en position neutre ou est soumis à des efforts statiques ou quasi-statiques, lesdits pistons (20,21) obturent complètement lesdits orifices (15,16), les déplacements du corps cylindrique interne (2) et du distributeur (19) étant dans le dernier cas concomitants, et tel que, lorsque le dispositif (1) est soumis à des vibrations, les pistons (20,21) dégagent au moins partiellement l'un ou l'autre desdits orifices (15,16) de façon à alimenter en liquide la chambre correspondante (6A,6B).

2. Dispositif selon la revendication 1,
   caractérisé en ce que lesdits moyens de rappel élastique entre les premier et second corps comprennent une paroi de séparation annulaire (7) solidaire de la face externe (2B1) du premier corps tubulaire interne (2) et s'appuyant de façon étanche sur la face interne (4B1) du second corps tubulaire externe (4), et deux ressorts hélicoïdaux (8,9), s'étendant parallèlement à l'axe X-X du dispositif, logés, respectivement, dans les première (6A) et seconde (6B) chambres, et s'appuyant, chacun, sur ladite paroi de séparation (7) et la face d'extrémité (6A1,6B1), opposée à ladite paroi (7), de la chambre respective (6A,6B).

3. Dispositif selon la revendication 1,
   caractérisé en ce que lesdits moyens de rappel élastique entre les premier et second corps sont constitués par une bague (10) de matière synthétique relativement souple, solidaire de la face externe (2B1) du premier corps tubulaire interne (2) et de la face interne (4B1) du second corps tubulaire externe (4).

**4.** Dispositif selon la revendication 3,
caractérisé en ce que ladite bague (10) est réalisée en élastomère.

**5.** Dispositif selon l'une quelconque des revendications 1 à 4,
caractérisé en ce que la tige de piston (22) est creuse, et un orifice (23), dans la paroi de celle-ci, met en communication l'intérieur de la tige (22) et le volume (24) défini entre les pistons (20,21) et cette dernière, tandis que, à l'extrémité opposée aux pistons, ladite tige (22) est en communication avec un dispositif d'alimentation en liquide.

**6.** Dispositif selon l'une quelconque des revendications 1 à 5,
caractérisé en ce que les première (6A) et seconde (6B) chambres sont en communication, respectivement, par des premier (11) et second (12) perçages, ménagés dans la paroi du second corps tubulaire externe (4), avec un système de purge, par l'intermédiaire de premier (13) et second (14) conduits.

**7.** Dispositif selon l'une quelconque des revendications 1 à 6,
caractérisé en ce que des orifices (34,35) d'évacuation de liquide sont prévus dans lesdits premier (2) et second (4) corps tubulaires, extérieurement à la zone desdites première (6A) et seconde (6B) chambres.

**8.** Dispositif selon l'une quelconque des revendications 1 à 7,
caractérisé en ce que les moyens de rappel élastique du distributeur (19) sont constitués par deux ressorts hélicoïdaux (26,27), logés dans le premier corps tubulaire interne (2), agissant de part et d'autre, respectivement, de l'ensemble formé par les deux pistons (20,21) du distributeur (19).

**9.** Dispositif selon l'une quelconque des revendications 1 à 8,
caractérisé en ce que les moyens d'amortissement du distributeur (19) comportent un piston (28) porté par la tige de piston (22) du distributeur (19) au voisinage de l'extrémité de celle-ci opposée aux pistons (20, 21) du Distributeur, et susceptible de se déplacer dans un cylindre (29) dont les deux chambres (30, 31), délimitées par ledit piston (28), sont reliées par un conduit (32) de section calibrée fixe.

**10.** Dispositif selon l'une quelconque des revendications 1 à 8,
caractérisé en ce que les moyens d'amortissement du distributeur (19) comportent un piston (28), porté par la tige de piston (22) du distributeur (19) au voisinage de l'extrémité de celle-ci opposée aux pistons (20,21) du distributeur, et susceptible de se déplacer dans un cylindre (29) dont les deux chambres (30,31), délimitées par ledit piston (28), sont reliées par un conduit (32) de section réglable.

**11.** Dispositif selon la revendication 10,
caractérisé en ce que la section dudit conduit (32) est réglée par un pointeau (33).

**12.** Aéronef à voilure tournante comportant un rotor principal de sustentation entraîné par une boîte (3) de transmission principale de la puissance motrice qui supporte un fuselage (5) par l'intermédiaire de barres de liaison obliques,
caractérisé en ce que chaque barre de liaison entre ladite boîte de transmission (3) et ledit fuselage (5) comporte un dispositif de liaison élastique (1) selon l'une quelconque des revendications 1 à 11.

**Claims**

**1.** Device (1) for elastic coupling between two parts (3,5) in order to transmit from one to the other the static forces in the axis of the device and to filter the coaxial vibrations between the first and the second part, of the type comprising:
- a first, inner tubular body (2) capable of being coupled to the first part (3),
- a second, outer tubular body (4), coaxial with the said first body (2), and capable of being coupled to the second part (5),
- means (7,8,9;10) for elastic return in the axial direction, housed in the annular space (6) existing between the said first and second bodies (2,4) and coupling in a leaktight fashion the said first and second bodies,
characterized in that :

- the said annular space (6) is separated, by the said elastic return means (7,8,9;10) into first (6A) and second (6B) chambers filled with a liquid,
- the said first (6A) and second (6B) chambers are in communication, respectively, by at least one first orifice (15) and at least one second orifice (16) made in the said first body (2), with the inside (17) of the latter,
- on the inside of the said first body (2) there is provided a distributor of liquid (19) comprising two pistons (20,21) for which the inner wall (2B2) of the said first body (2) acts as a cylinder, which are coupled by a piston rod (22) and separated one from the other by the distance l separating the said first (15) and second (16) orifices, and the volume (24) of which defined between them can be supplied with liquid, and
- elastic return means and damping means (26,27;28,29) of the said distributor (19) are provided,

the arrangement of the aforementioned elements being such that, when the device (1) is in the neutral position or is subjected to static or quasi-static forces, the said pistons (20,21) completely block the said orifices (15,16), the movements of the inner cylindrical body (2) and of the distributor (19) being in the latter case concomitant, and such that, when the device (1) is subjected to vibrations, the pistons (20,21) unblock, at least partially, one or other of the said orifices (15,16) in such a fashion as to supply liquid to the corresponding chamber (6A,6B).

2. Device according to Claim 1,
   characterized in that the said elastic return means between the first and second bodies comprise an annular separation wall (7) which is solidly fixed to the outer face (2B1) of the first, inner tubular body (2) and presses in a leaktight fashion on the inner face (4B1) of the second, outer tubular body (4), and two helical springs (8,9), extending parallel to the axis X-X of the device, housed, respectively, in the first (6A) and second (6B) chambers, and each pressing on the said separation wall (7) and the end face (6A1,6B1), opposite the said wall (7), of the respective chamber (6A,6B).

3. Device according to Claim 1,
   characterized in that the said elastic return means between the first and second bodies are constituted by a ring (10) of relatively flexible synthetic material, solidly attached to the outer face (2B1) of the first, inner tubular body (2) and to the inner face (4B1) of the second, outer tubular body (4).

4. Device according to Claim 3,
   characterized in that the said ring (10) is made of elastomer.

5. Device according to any one of Claims 1 to 4,
   characterized in that the piston rod (22) is hollow, and an orifice (23), in the wall of the latter, puts in communication the inside of the rod (22) and the volume (24) defined between the pistons (20,21) and the latter, whilst, at the opposite end to the pistons, the said rod (22) is in communication with a device for supplying liquid.

6. Device according to any one of Claims 1 to 5,
   characterized in that the first (6A) and second (6B) chambers are in communication, respectively, by first (11) and second (12) drillings, made in the wall of the second, outer tubular body (4), with a bleed system, by the intermediary of first (13) and second (14) conduits.

7. Device according to any one of Claims 1 to 6,
   characterized in that orifices (34, 35) for the evacuation of liquid are provided in the said first (2) and second (4) tubular bodies, outside the zone of the said first (6A) and second (6B) chambers.

8. Device according to any one of Claims 1 to 7,
   characterized in that the elastic return means of the distributor (19) are constituted by two helical springs (26,27), housed in the first, inner tubular body (2), acting on either side, respectively, of the assembly formed by the two pistons (20,21) of the distributor (19).

9. Device according to any one of Claims 1 to 8,
   characterized in that the damping means of the distributor (19) comprise a piston (28) borne by the piston rod (22) of the distributor (19) in the vicinity of the end of the rod opposite the pistons (20,21) of the distributor, and capable of moving in a cylinder (29) the two chambers (30,31) of which, delimited

EP 0 519 786 B1

by the said piston (28), are coupled by a conduit (32) of calibrated fixed cross-section.

10. Device according to any one of Claims 1 to 8,
characterized in that the damping means of the distributor (19) comprise a piston (28) borne by the piston rod (22) of the distributor (19) in the vicinity of the end of the rod opposite the pistons (20,21) of the distributor, and capable of moving in a cylinder (29) the two chambers (30,31) of which, delimited by the said piston (28), are coupled by a conduit (32) of adjustable cross-section.

11. Device according to Claim 10,
characterized in that the cross section of the said conduit (32) is controlled by a needle valve (33).

12. Aircraft with rotating wings comprising a principal lift rotor driven by a principal transmission box (3) for the motive power which supports a fuselage (5) by the intermediary of oblique coupling bars,
characterized in that each coupling bar between the said transmission box (3) and the said fuselage (5) comprises a device for elastic coupling (1) according to any one of Claims 1 to 11.

**Patentansprüche**

1. Vorrichtung (1) zur elastischen Verbindung von zwei Teilen (3,5), um zwischen denselben die statischen Kräfte in der Achse der Vorrichtung zu übertragen und die koaxialen Schwingungen zwischen dem ersten und dem zweiten Teil auszufiltern, mit:
   - einem ersten röhrenförmigen Innengehäuse (2), das mit dem ersten Teil (3) verbunden werden kann,
   - einem zweiten zum ersten Gehäuse (2) koaxialen röhrenförmigen Außengehäuse (4), das mit dem zweiten Teil (5) verbunden werden kann,
   - elastischen Rückholmitteln (7,8,9; 10) in axialer Richtung, die im Ringraum (6) zwischen dem ersten und zweiten Gehäuse (2,4) angeordnet sind und das erste und zweite Gehäuse dicht miteinander verbinden,
   dadurch gekennzeichnet, daß:
   - der Ringraum (6) durch die elastischen Rückholmittel (7,8,9; 10) in eine erste (6A) und eine zweite (6B) Kammer, die mit einer Flüssigkeit gefüllt sind, getrennt wird,
   - die erste (6A) und zweite (6B) Kammer über mindestens eine erste Öffnung (15) und mindestens eine zweite Öffnung (16) im ersten Gehäuse (2) mit dessen Innenraum (17) in Verbindung stehen,
   - innerhalb des ersten Gehäuses (2) ein Flüssigkeitsverteiler (19) mit zwei Kolben (20,21) vorgesehen ist, für die die Innenwand (2B2) des ersten Gehäuses (2) die Rolle des Zylinders spielt, die durch eine Kolbenstange (22) verbunden sind und voneinander durch den Abstand I zwischen der ersten (15) und zweiten (16) Öffnung getrennt sind, wobei der Raum (24) zwischen denselben mit Flüssigkeit gefüllt werden kann, und
   - elastische Rückhol- und Dämpfungsmittel (26,27; 28,29) des Verteilers (19) vorgesehen sind,
   wobei die Anordnung der obigen Elemente derart ist, daß, wenn sich die Vorrichtung (1) in Neutralstellung befindet oder statischen oder quasi-statischen Kräften ausgesetzt ist, die Kolben (20,21) die Öffnungen (15,16) vollständig verschließen, wobei die Bewegungen des zylindrischen Innengehäuses (2) und des Verteilers (19) im letzten Fall gleichzeitig erfolgen, und derart, daß, wenn die Vorrichtung (1) Schwingungen ausgesetzt ist, die Kolben (20,21) die eine oder andere der Öffnungen (15,16) wenigstens teilweise freigeben, so daß die entsprechende Kammer (6A,6B) mit Flüssigkeit beaufschlagt wird.

2. Vorrichtung nach Anspruch 1,
dadurch gekennzeichnet, daß die elastischen Rückholmittel zwischen dem ersten und zweiten Gehäuse eine ringförmige Trennwand (7), die mit der Außenseite (2B1) des ersten röhrenförmigen Innengehäuses (2) verbunden ist und an der Innenseite (4B1) des zweiten röhrenförmigen Außengehäuses (4) hermetisch dicht anliegt, und zwei Schraubenfedern (8,9) haben, die parallel zur X-X-Achse der Vorrichtung in der ersten (6A) bzw. in der zweiten (6B) Kammer angeordnet sind und jeweils an der Trennwand (7) und der Stirnwand (6A1,6B1) gegenüber Wand (7) der entsprechenden Kammer (6A,6B) anliegen.

3. Vorrichtung nach Anspruch 1,
dadurch gekennzeichnet, daß die elastischen Rückholmittel zwischen dem ersten und zweiten Gehäuse

10

aus einem Ring (10) aus einem verhältnismäßig weichen synthetischen Material bestehen, der mit der Außenwand (2B1) des ersten röhrenförmigen Innengehäuses (2) und der Innenwand (4B1) des zweiten röhrenförmigen Außengehäuses (4) verbunden ist.

4. Vorrichtung nach Anspruch 3,
dadurch gekennzeichnet, daß der Ring (10) aus einem Elastomer besteht.

5. Vorrichtung nach einem der Ansprüche 1 bis 4,
dadurch gekennzeichnet, daß die Kolbenstange (22) hohl ist und daß durch eine Öffnung (23) in deren Wand der Innenraum der Stange (22) und der Raum (24) zwischen den Kolben (20,21) und derselben verbunden werden, während die Stange (22) an dem den Kolben entgegengesetzten Ende mit einer Vorrichtung für die Zuführung der Flüssigkeit verbunden ist.

6. Vorrichtung nach einem der Ansprüche 1 bis 5,
dadurch gekennzeichnet, daß die erste (6A) und zweite (6B) Kammer durch eine erste (11) und eine zweite (12) Bohrung in der Wand des zweiten röhrenförmigen Außengehäuses (4) mit einem Entlüftungssystem über eine erste (13) und eine zweite (14) Leitung in Verbindung stehen.

7. Vorrichtung nach einem der Ansprüche 1 bis 6,
dadurch gekennzeichnet, daß Öffnungen (34,35) zum Ablassen der Flüssigkeit im ersten (2) und zweiten (4) röhrenförmigen Gehäuse außerhalb des Bereichs der ersten (6A) und zweiten (6B) Kammer vorgesehen sind.

8. Vorrichtung nach einem der Ansprüche 1 bis 7,
dadurch gekenzeichnet, daß die elastischen Rückholmittel des Verteilers (19) aus zwei Schraubenfedern (26,27) im ersten röhrenförmigen Innengehäuse (2) bestehen, die jeweils beiderseits der aus den beiden Kolben (20,21) des Verteilers (19) bestehenden Baugruppe wirksam sind.

9. Vorrichtung nach einem der Ansprüche 1 bis 8,
dadurch gekennzeichnet, daß die Dämpfungsmittel des Verteilers (19) einen Kolben (28) an der Kolbenstange (22) des Verteilers (19) in der Nähe des Endes derselben haben, das den Kolben (20,21) des Verteilers entgegengesetzt ist, und der sich in einem Zylinder (29) bewegen kann, dessen beide von Kolben (28) begrenzte Kammern (30,31) durch eine Leitung (32) mit fest kalibriertem Querschnitt verbunden sind.

10. Vorrichtung nach einem der Ansprüche 1 bis 8,
dadurch gekennzeichnet, daß die Dämpfungsmittel des Verteilers (19) einen Kolben (28) an der Kolbenstange (22) des Verteilers (19) in der Nähe des Endes derselben haben, das den Kolben (20,21) des Verteilers entgegengesetzt ist, und der sich in einem Zylinder (29) bewegen kann, dessen beide von Kolben (28) begrenzte Kammern (30,31) durch eine Leitung (32) mit einstellbarem Querschnitt verbunden sind.

11. Vorrichtung nach Anspruch 10,
dadurch gekennzeichnet, daß der Querschnitt der Leitung (32) durch ein Nadelventil (33) einstellbar ist.

12. Drehflügler mit einem Hauptauftriebsrotor, der seine Antriebsleistung über ein Hauptgetriebe (3) erhält, an dem sich über schräge Verbindungsstangen ein Rumpf (5) befindet,
dadurch gekennzeichnet, daß jede Verbindungsstange zwischen dem Getriebe (3) und dem Rumpf (5) eine elastische Verbindungsvorrichtung (1) nach einem der Ansprüche 1 bis 11 hat.

FIG.1

FIG.2

FIG.3

FIG.4

FIG.6

FIG.5